# FASCICULE DE BREVET EUROPEEN

(11) **EP 2 841 260 B1**
(45) Date de publication et mention de la délivrance du brevet: **10.08.2016**
(21) Numéro de dépôt: 13723856.4
(22) Date de dépôt: 23.04.2013
(51) Int. Cl.: B29D 30/00

(54) **PROCÉDÉ DE FABRICATION D'ENVELOPPES DE PNEUMATIQUE ET ORGANE DE TRANSPORT**
VERFAHREN ZUR HERSTELLUNG VON REIFENABDECKUNGEN UND TRANSPORTVORRICHTUNG
METHOD FOR MANUFACTURING TYRE COVERS AND TRANSPORTING MEANS

(30) Priorité: 27.04.2012 FR 1253901
(43) Date de publication de la demande: 04.03.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: MOYNET, Julien, 63040 Clermont-Ferrand Cedex 9 (FR); GUILBAUD, Jean-Pierre, 63040 Clermont-Ferrand Cedex 9 (FR); LEBEDEL, Eric, 63040 Clermont-Ferrand Cedex 9 (FR); PREVOST, Aurélien, 63040 Clermont-Ferrand Cedex 9 (FR)
(74) Mandataire: Noel, Luminita
(86) Numéro de dépôt international: PCT/FR2013/050899
(87) Numéro de publication internationale: WO 2013/160606

(56) Documents cités:
- EP-A1- 1 642 695
- GB-A- 1 184 518
- US-A- 3 229 329
- US-A- 5 928 675
- US-A1- 2009 123 585
- US-B1- 6 582 212

## Description

L'invention concerne la fabrication des pneumatiques de véhicule et plus précisément le transport des bandages crus jusqu'à un poste de cuisson, puis le transport des enveloppes cuites à partir de ce dernier.

Pour la fabrication d'une enveloppe de pneumatique de roue de véhicule, on réalise un bandage comprenant de la gomme crue ainsi que différents éléments de structure et de renforts tels que des câbles en fibre textile et des armatures métalliques. On transporte ensuite le bandage jusqu'à une presse de cuisson dans laquelle a lieu la vulcanisation de la gomme. On obtient ainsi une enveloppe de gomme cuite qui formera le pneumatique une fois montée sur une roue et gonflée.

Les documents US 6582212 - B, US 3229329 - A, GB 1184518 - A, US2009/0123585 - A, US 5928675 - A décrivent des procédés et des appareils pout transférer des pneus crus dans les moules de vulcanisation et enlever les pneus cuits de ces moules.

Le document EP1642695 - A divulgue un procédé de fabrication d'enveloppes de pneumatique dans lequel:
- un organe se déplace en transportant au moins un bandage cru jusqu'à une zone prédéterminée de chargement d'un poste de cuisson;
- au moins une enveloppe de pneumatique est transférée du poste à l'organe et le ou chaque bandage de l'organe au poste, et
- l'organe se déplace en transportant la ou chaque enveloppe hors de la zone,
- l'organe demeurant dans la zone entre les deux étapes de transport.

Pour la vulcanisation, un organe de transport emmène le bandage cru jusqu'à une zone à partir de laquelle on charge le bandage dans la presse. Puis on éloigne l'organe de transport. Une fois la cuisson accomplie, ce même organe retourne à la zone de chargement où il reçoit l'enveloppe et l'emmène jusqu'à un poste de refroidissement.

Un tel procédé présente des inconvénients. En effet, il faut compter un aller-retour pour le chargement du bandage dans la presse puis un autre pour le déchargement de l'enveloppe. Le nombre de déplacements effectués par l'organe est donc relativement élevé et compte pour une part non négligeable dans les temps de cycle. En outre, l'organe est déplacé vers la presse une fois la cuisson achevée. Or l'enveloppe demeure dans la presse jusqu'à l'arrivée de l'organe de sorte qu'elle subit un supplément de cuisson susceptible d'être nuisible.

Un but de l'invention est d'améliorer la logistique des bandages crus et des enveloppes en relation avec le poste de cuisson.

À cet effet, on prévoit selon l'invention un procédé de fabrication d'enveloppes de pneumatique comme défini dans la revendication 1.

Ainsi, que l'organe de transport se déplace jusqu'à la zone de chargement ou à partir de celle-ci, il transporte toujours une charge, bandage cru ou enveloppe. Chaque déplacement sert donc à acheminer une charge jusqu'à son point de destination. De la sorte, on tire le profit maximal des déplacements de l'organe. En outre, on peut acheminer l'organe pour qu'il arrive à la zone de chargement au moment où s'achève la cuisson de l'enveloppe afin qu'elle puisse être extraite de la presse sans subir de supplément de cuisson.

Avantageusement, on extrait la ou chaque enveloppe d'une presse du poste avant l'arrivée de l'organe dans la zone.

Cette étape permet si besoin d'extraire l'enveloppe de la presse au moment précis où la cuisson doit s'achever sans attendre l'arrivée de l'organe de transport. On évite ainsi tout risque de cuisson excessive.

De préférence, on effectue le transfert de la ou chaque enveloppe avant celui du ou de chaque bandage.

Ainsi, le bandage peut être disposé dans la presse dont on vient d'extraire l'enveloppe. On optimise donc le nombre de charges transportées par l'organe par rapport au nombre de presse disponible.

Avantageusement, on déplace l'organe au sein de la zone après le transfert de la ou chaque enveloppe et avant celui du ou de chaque bandage.

Ainsi, lorsqu'on effectue les transferts au moyen d'un même outil du poste de cuisson, ce déplacement permet de limiter les déplacements de l'outil. En effet, la position de l'outil dans laquelle il dispose une charge sur l'organe de transport est la même que celle dans laquelle il en prélève une autre.

De préférence, lors de la première étape de transport, l'organe porte au moins deux bandages crus.

De préférence, lors de la deuxième étape de transport, l'organe porte au moins deux enveloppes.

Ces deux caractéristiques permettent d'effectuer le chargement et le déchargement de deux presses au cours de la même étape.

On pourra aussi prévoir selon l'invention un procédé de fabrication d'enveloppes de pneumatique, dans lequel on dispose d'un organe comprenant :
- au moins un support de bandage cru de pneumatique, comprenant au moins un élément apte à être en contact avec un flanc supérieur du bandage lorsque ce dernier repose sur le support par un flanc inférieur du bandage, et
- au moins un support d'une enveloppe, le support étant dépourvu d'un tel élément,
   le procédé comprenant les étapes suivantes :
- l'organe se déplace en transportant au moins un bandage cru jusqu'à une zone prédéterminée de chargement d'un poste de cuisson ;
- on transfère au moins une enveloppe de pneumatique du poste à l'organe et le ou chaque bandage de l'organe au poste, et
- l'organe se déplace en transportant la ou chaque enveloppe hors de la zone, l'organe demeurant dans la zone entre les deux étapes de transport.

On prévoit également selon l'invention un organe de transport, tel qu'un chariot, comme défini dans la revendication 7, qui comprend :
- au moins un support de bandage cru de pneumatique, comprenant au moins un élément apte à être en contact avec un flanc supérieur du bandage lorsque ce dernier repose sur le support par un flanc inférieur du bandage, et
- au moins un support d'une enveloppe, le support étant dépourvu d'un tel élément.

Ce chariot permet de mettre en oeuvre le procédé de l'invention.

Avantageusement, les supports de bandage sont au moins au nombre de deux et/ou les supports d'enveloppe sont au moins au nombre de deux.

Avantageusement, le ou chaque support d'enveloppe comprend une table à rouleaux.

On prévoit également selon l'invention une installation de fabrication d'enveloppes, qui comprend un poste de cuisson et un organe de transport selon l'invention.

Dans un mode de réalisation, l'installation comprend une voie dédiée au guidage mécanique de l'organe jusqu'à une zone de chargement du poste de cuisson.

On peut prévoir que le poste comprend au moins deux presses de cuisson.

Nous allons présenter un mode de mise en oeuvre du procédé de l'invention à titre d'exemple non limitatif et à l'aide des dessins sur lesquels :
- la figure 1 est une vue en perspective d'un organe de transport selon l'invention ; et
- les figures 2 à 5 illustrent quatre étapes respectives de mise en oeuvre du procédé de l'invention au moyen de cet organe.

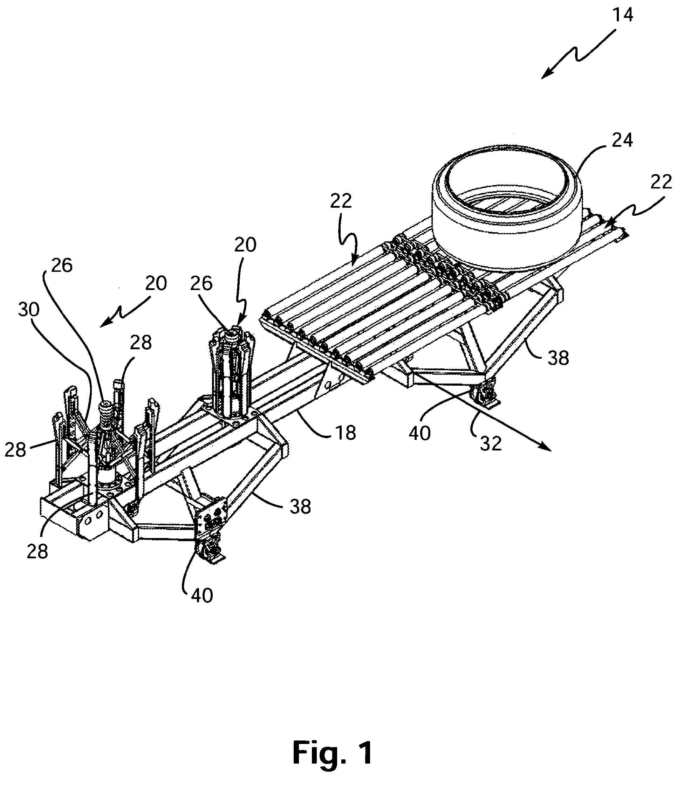

Nous allons présenter à l'aide des figures 1 à 5 un procédé selon l'invention et une installation pour sa mise en oeuvre. L'installation sert à la fabrication d'enveloppes de pneumatique de roue de véhicules. Il pourra s'agir de véhicules de type léger, de véhicules de tourisme, de véhicules utilitaires, de véhicule de type poids-lourd ou encore d'engins de génie civil. L'installation concerne plus précisément la cuisson des bandages comprenant de la gomme crue et servant à la fabrication des enveloppes.

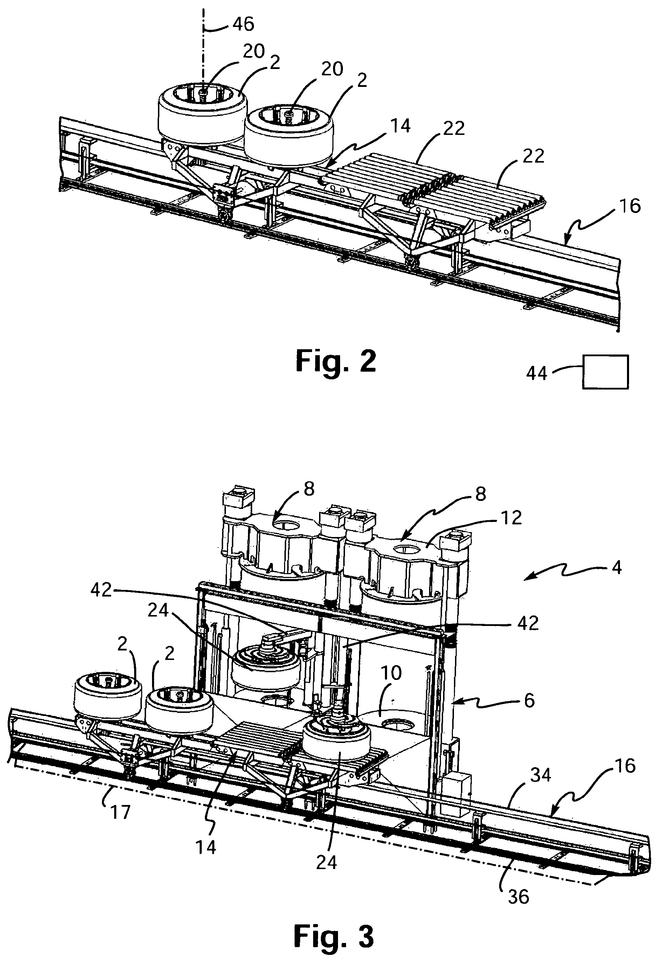

Des bandages 2 sont illustrés aux figures 2 à 4. Chaque bandage comprend de la gomme crue ainsi que des éléments de structure et de renforts. II présente une forme générale cylindrique et deux flancs de forme générale tronconique s'étendant aux extrémités axiales du cylindre.

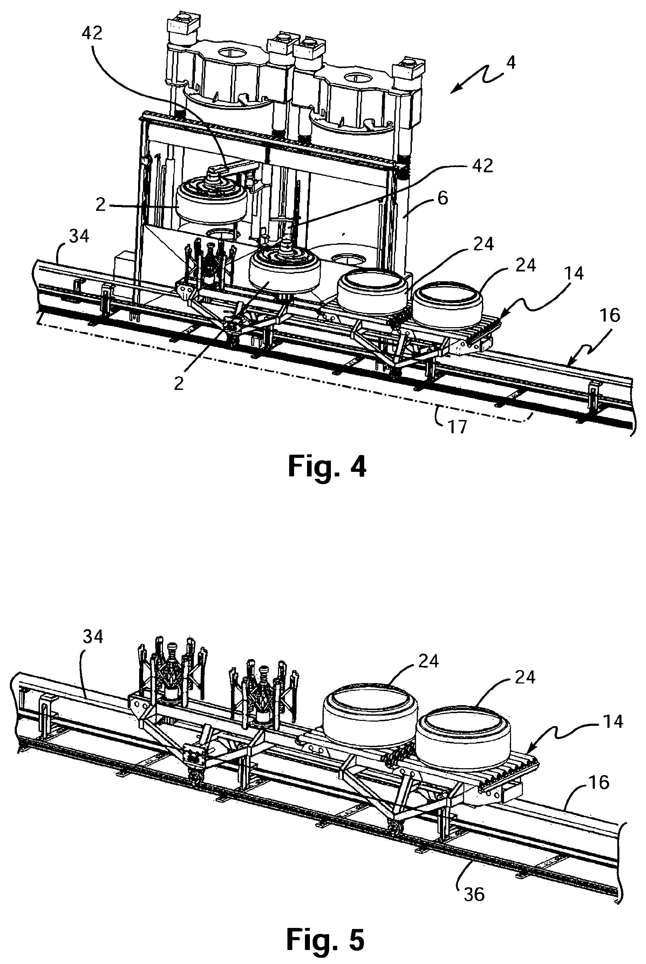

L'installation 4 comprend un poste de cuisson 6 comprenant une ou plusieurs presses de cuisson 8, ici au nombre de deux. Chaque presse 8 comprend en l'espèce une partie inférieure 10 et une partie supérieure 12 montées mobiles l'une par rapport à l'autre suivant la direction verticale. Les deux parties 10 et 12 sont éloignées l'une de l'autre comme illustré sur les figures 3 et 4 pour permettre le chargement d'un bandage dans la presse et le déchargement d'une enveloppe hors de cette dernière. Ces deux parties sont en contact l'une avec l'autre lors de la cuisson qui permet de réaliser la vulcanisation de la gomme et d'obtenir une enveloppe.

L'installation comprend un organe de transport 14 monté mobile par rapport au poste 6 sur une voie de guidage 16.

L'organe 14 est ici formé par un chariot qui comporte un bâti 18 portant des supports qui sont en l'espèce au nombre de quatre. Il s'agit de deux supports identiques 20 aptes à supporter chacun un bandage cru et de deux supports identiques 22 aptes à supporter chacun une enveloppe cuite 24. Les quatre supports sont en l'espèce alignés suivant une direction longitudinale du chariot et la base des quatre supports s'étend à la même hauteur suivant la direction verticale.

Chaque support de bandage comprend un mât vertical central 26 et des bras verticaux périphériques 28, en l'espèce au nombre de six, reliés chacun au mât par des tringles 30 pour avoir un mouvement de translation par rapport au mât suivant une direction horizontale radiale à l'axe vertical du mât. Les bras 28 s'étendent tous à la même hauteur et sont identiques entre eux. Le support est agencé de sorte que les bras 28 s'éloignent du mât simultanément ou s'en rapprochent simultanément. Sur la figure 1, le support 20 le plus à gauche a ainsi été illustré en configuration étendue tandis que le support situé à droite figure en configuration rétractée.

Chacun des supports d'enveloppe est formé en l'espèce par une table à rouleaux. Les rouleaux sont tous identiques entre eux et définissent un plan horizontal. Les axes des rouleaux sont horizontaux et parallèles à la direction longitudinale du chariot. Cette orientation des axes permet un déchargement des enveloppes par exemple vers un poste de refroidissement suivant un mouvement de coulissement perpendiculaire à la direction longitudinale du chariot, comme illustré par la flèche 32 sur la figure 1.

La voie de guidage 16 s'étend en l'espèce au sol et y est rigidement fixée. Elle forme ici une voie ferrée. Elle s'étend suivant une direction horizontale rectiligne. Elle comprend un longeron central 34 et deux rails latéraux 36. Le chariot 14 comprend quatre jambages 38 portant chacun une roue 40 apte à venir en appui sur l'un des deux rails et en prise avec ce dernier. Ainsi les deux roues de gauche viennent en appui sur le rail gauche et les deux roues de droite viennent en appui sur le rail droit. Le chariot s'étend alors au-dessus du longeron 16 en enjambant ce dernier. Le chariot 14 est ainsi monté mobile à coulissement sur la voie 16 pour rouler sur cette dernière.

La voie s'étend jusqu'à un poste de chargement de bandages crus destinés à être cuits. Elle s'étend aussi jusqu'à un poste de refroidissement des enveloppes cuites. Elle passe par ailleurs à proximité du poste 6 comme illustré sur les figures 3 et 4. Plus précisément, la voie 16 intercepte une zone prédéterminée 17 de chargement et de déchargement du poste 6. Ce chargement et ce déchargement est assuré par au moins un organe tel qu'une potence 42 du poste 6. Les potences sont en l'espèce au nombre de deux. Dans cette zone 17, les bandages crus situés sur le chariot peuvent donc être transportés par l'une des potences 42 depuis le chariot jusqu'à la presse correspondante 8. Dans cette même zone 17, les enveloppes cuites peuvent être transportés des presses jusqu'au chariot. On définit donc la zone de chargement et de déchargement 17 comme l'ensemble des positions que le chariot monté sur les rails peut occuper pour permettre un tel chargement, un tel déchargement ou les deux. À l'inverse, lorsque le chariot se situe hors de la zone de chargement et de déchargement, il n'est plus possible pour l'une quelconque des potences 42 de disposer une charge sur le chariot ou de l'en prélever.

L'installation comprend une motorisation 44 montée fixe sur le sol et assurant le déplacement du chariot sur la voie 16 par exemple par l'intermédiaire de poulies et d'une courroie.

L'installation comprend également des moyens de commande à distance du déplacement du chariot, de l'actionnement des potences 42, de l'ouverture et de la fermeture des presses 8 et des différentes étapes de la cuisson avec leurs paramètres.

Nous allons maintenant décrire un mode de mise en oeuvre du procédé de l'invention au moyen de cette installation.

Dans une première étape non illustrée, on charge deux bandages crus 2 sur les supports 20 du chariot à un poste de chargement distant de la zone 17. Pour cela, les supports 20 sont initialement en configuration rétractée. On présente un bandage sur l'un des supports de sorte que l'axe principal 46 du bandage soit vertical et coïncide avec l'axe du mât. On abaisse le bandage en regard des bras 28 puis on commande l'extension de ces derniers jusqu'à mettre leur extrémité supérieure en contact avec le bord du flanc supérieur du bandage. Le flanc inférieur du bandage repose par ailleurs sur le bâti du chariot avec lequel il est en contact direct. L'extrémité supérieure des bras maintient également le bord du flanc supérieur à une certaine distance du bâti suivant la direction verticale pour éviter un affaissement du bandage sous son propre poids.

Dans une étape suivante, on déplace le chariot 14 ainsi chargé sur la voie 16 comme illustré à la figure 2. Les supports 22 ne portent aucune charge à ce stade. Ce déplacement a lieu jusqu'à faire pénétrer le chariot, et plus précisément les supports 22, dans la zone de chargement 17 de sorte qu'ils s'étendent en regard du poste de cuisson 6 et à portée des potences 42.

Au cours de ce déplacement du chariot, des bandages sont en cours de cuisson dans les deux presses 8 respectives. Cette cuisson s'achève avant que le chariot n'arrive dans la zone de chargement. Préalablement à cette arrivée, on ouvre les presses et les potences 42 en extraient les enveloppes respectives. Les enveloppes sont donc portées par les potences et hors des presses dans l'attente de l'arrivée du chariot.

Le chariot 14 arrive ensuite et s'arrête lorsque les supports 22 s'étendent dans la zone de chargement 17 et en regard du poste 6.

Dans une étape ultérieure illustrée à la figure 3, les potences 42 déplacent les enveloppes et les déposent sur les supports 22 respectifs.

Dans une étape ultérieure, on déplace le chariot sur la voie 16 afin de placer les supports 20 en regard du poste 6 et à portée des potences. Le chariot ne quitte pas la zone de chargement au cours de ce déplacement. Il avance seulement d'un pas. Le chariot passe donc de la position illustrée sur la figure 3 à celle illustrée sur la figure 4.

Dans une étape ultérieure illustrée à la figure 4, les deux potences 42 saisissent les bandages crus initialement portés par les supports et les disposent dans les presses respectives.

Ensuite, on ferme les presses pour procéder à la vulcanisation des bandages. Simultanément, le chariot portant maintenant seulement les deux enveloppes sur les supports 22 quitte la zone 17 et se déplace sur la voie 16 jusqu'au poste de refroidissement des enveloppes où ces dernières sont déchargées, par exemple suivant la direction 32 à partir des rouleaux.

Conformément à ce mode de mise en oeuvre, il est avantageux que les deux enveloppes soient sorties des presses avant l'arrivée du chariot dans la zone de chargement et qu'elles soient portées par les potences jusqu'à cette arrivée afin d'éviter une cuisson excessive des enveloppes.

On observe que ces différentes étapes peuvent être effectuées sans aucune intervention manuelle sur les produits. Les étapes faisant intervenir le poste de cuisson ont lieu de façon sécurisée et sans perturber l'alimentation du reste de la ligne de production. L'optimisation des déplacements des chariots permet un gain de temps de cycle pour chaque presse. Le déplacement de plusieurs bandages crus et de plusieurs enveloppes à la fois permet d'optimiser encore ces déplacements.

Les supports 20 permettent notamment l'ajustement de leur diamètre au diamètre interne des bandages crus qu'ils sont destinés à porter.

Bien entendu, on pourra apporter à l'invention de nombreuses modifications sans sortir du cadre de celle-ci.

On pourra prévoir que l'organe de transport n'est pas un chariot. Il pourrait s'agir par exemple d'un organe muni d'une nacelle, suspendu et guidé par une glissière. Il pourrait s'agir d'un véhicule se déplaçant sur le sol sans l'assistance d'une voie ferrée.

L'invention est utilisable si le poste de cuisson comprend une seule presse, l'organe de transport pouvant alors présenter un seul support de bandage et un seul support d'enveloppe.

On pourra donner une configuration différente aux supports de bandage et aux supports d'enveloppe du chariot.

## Revendications

1. Procédé de fabrication d'enveloppes (24) de pneumatique, dans lequel on dispose d'un organe (14) comprenant:
- au moins un support (20) de bandage cru de pneumatique, comprenant au moins un élément (28) apte à être en contact avec un flan supérieur du bandage lorsque ce dernier repose sur le support par un flanc inférieur du bandage, et
- au moins un support (22) d'une enveloppe, le support étant dépourvu d'un tel élément, le procédé comprenant les étapes suivantes :
- l'organe se déplace en transportant au moins un bandage cru (2) jusqu'à une zone prédéterminée (17) de chargement d'un poste de cuisson (6) ;
- on transfère au moins une enveloppe de pneumatique du poste à l'organe et le ou chaque bandage de l'organe au poste, et
- l'organe se déplace en transportant la ou chaque enveloppe hors de la zone, l'organe demeurant dans la zone entre les deux étapes de transport.

2. Procédé selon la revendication précédente, dans lequel on extrait la ou chaque enveloppe d'une presse (8) du poste avant l'arrivée de l'organe dans la zone.

3. Procédé selon au moins l'une quelconque des revendications précédentes dans lequel on effectue le transfert de la ou chaque enveloppe (24) avant celui du ou de chaque bandage (2).

4. Procédé selon au moins l'une quelconque des revendications précédentes dans lequel on déplace l'organe (14) au sein de la zone après le transfert de la ou chaque enveloppe et avant celui du ou de chaque bandage.

5. Procédé selon au moins l'une quelconque des revendications précédentes dans lequel, lors de la première étape de transport, l'organe porte au moins deux bandages crus (2).

6. Procédé selon au moins l'une quelconque des revendications précédentes dans lequel, lors de la deuxième étape de transport, l'organe porte au moins deux enveloppes (24).

7. Organe de transport (14), tel qu'un chariot, **caractérisé en ce qu'**il comprend :
- au moins un support (20) de bandage cru de pneumatique, comprenant au moins un élément (28) apte à être en contact avec un flanc supérieur du bandage lorsque ce dernier repose sur le support par un flanc inférieur du bandage, et
- au moins un support (22) d'une enveloppe, le support étant dépourvu d'un tel élément.

8. Organe selon la revendication précédente dans lequel les supports de bandage (20) sont au moins au nombre de deux.

9. Organe selon au moins l'une quelconque des revendications 7 ou 8 dans lequel les supports d'enveloppe (22) sont au moins au nombre de deux.

10. Organe selon au moins l'une quelconque des revendications 7 à 9 dans lequel le ou chaque support d'enveloppe (22) comprend une table à rouleaux.

11. Installation (4) de fabrication d'enveloppes, **caractérisée en ce qu'**elle comprend un poste de cuisson (6) et un organe de transport (14) selon au moins l'une quelconque des revendications 7 à 10.

12. Installation selon la revendication précédente, qui comprend une voie (16) dédiée au guidage mécanique de l'organe (14) jusqu'à une zone de chargement du poste de cuisson.

13. Installation selon au moins l'une quelconque des revendications 11 à 12, dans laquelle le poste comprend au moins deux presses de cuisson (8).

## Patentansprüche

1. Verfahren zur Herstellung von Reifenabdeckungen (24), wobei eine Vorrichtung (14) verwendet wird, die umfasst:
- mindestens einen Träger (20) eines Reifenrohlings, umfassend mindestens ein Element (28), das geeignet ist, mit einer oberen Flanke des Rohlings in Kontakt zu stehen, wenn der Letztere auf dem Träger durch eine untere Flanke des Rohlings liegt, und
- mindestens einen Träger (22) einer Abdeckung, wobei der Träger kein solches Element aufweist,
wobei das Verfahren die folgenden Schritte umfasst:
- Verschieben der Vorrichtung, indem mindestens ein Rohling (2) bis zu einer vorherbestimmten Ladezone (17) einer Vulkanisationsstation (6) transportiert wird;
- Transferieren mindestens einer Reifenabdeckung von der Station zu der Vorrichtung und dem oder jedem Rohling der Vorrichtung in der Station, und
- Verschieben der Vorrichtung, indem die oder jede Abdeckung aus der Zone transportiert wird, wobei die Vorrichtung zwischen zwei Transportschritten in der Zone bleibt.

2. Verfahren nach dem vorhergehenden Anspruch, wobei die oder jede Abdeckung aus einer Presse (8) der Station vor der Ankunft der Vorrichtung in der Zone extrahiert wird.

3. Verfahren nach mindestens einem der vorhergehenden Ansprüche, wobei der Transfer der oder jeder Abdeckung (24) vor jenem des oder jedes Rohlings (2) durchgeführt wird.

4. Verfahren nach mindestens einem der vorhergehenden Ansprüche, wobei die Vorrichtung (14) innerhalb der Zone nach dem Transfer der oder jeder Abdeckung und vor jenem des oder jedes Rohlings verschoben wird.

5. Verfahren nach mindestens einem der vorhergehenden Ansprüche, wobei bei dem ersten Transportschritt die Vorrichtung mindestens zwei Rohlinge (2) trägt.

6. Verfahren nach mindestens einem der vorhergehenden Ansprüche, wobei bei dem zweiten Transportschritt die Vorrichtung mindestens zwei Abdeckungen (24) trägt.

7. Transportvorrichtung (14), wie ein Wagen, **dadurch gekennzeichnet, dass** diese umfasst:
- mindestens einen Träger (20) eines Reifenrohlings, umfassend mindestens ein Element (28), das geeignet ist, mit einer oberen Flanke des Rohlings in Kontakt zu stehen, wenn der Letztere auf dem Träger durch eine untere Flanke des Rohlings liegt, und
- mindestens einen Träger (22) einer Abdeckung, wobei der Träger kein solches Element aufweist.

8. Vorrichtung nach dem vorhergehenden Anspruch, wobei die Träger (20) des Rohlings mindestens zwei an der Zahl sind.

9. Vorrichtung nach mindestens einem der Ansprüche 7 oder 8, wobei die Träger (22) der Abdeckung mindestens zwei an der Zahl sind.

10. Vorrichtung nach mindestens einem der Ansprüche 7 bis 9, wobei der oder jeder Träger (22) der Abdeckung einen Rolltisch umfasst.

11. Einrichtung (4) zur Herstellung von Abdeckungen, **dadurch gekennzeichnet, dass** diese eine Vulkanisationsstation (6) und eine Transportvorrichtung (14) nach mindestens einem der Ansprüche 7 bis 10 umfasst.

12. Einrichtung nach dem vorhergehenden Anspruch, welche ein Gleis (16) umfasst, das für die mechanische Führung der Vorrichtung (14) bis zu einer Ladezone der Vulkanisationsstation bestimmt ist.

13. Einrichtung nach mindestens einem der Ansprüche 11 bis 12, wobei die Station mindestens zwei Vulkanisationspressen (8) umfasst.

## Claims

1. Method for manufacturing tyres (24), wherein one has a member (14) comprising:
- at least one green pneumatic tyre support (20), comprising at least one element (28) capable of being in contact with an upper sidewall of the green tyre when said green tyre rests on the support via a lower sidewall of the green tyre, and
- at least one support (22) of a cured tyre, the support being without such an element, the method comprising the following steps :
- the member is moved, transporting at least one green tyre (2) into a predetermined loading zone (17) of a curing station (6);
- at least one cured tyre is transferred from the station to the member and the or each green tyre is transferred from the member to the station, and
- the member is moved, transporting the or each cured tyre out of the zone, the member remaining in the zone between the two transporting steps.

2. Method according to the preceding claim, in which the or each cured tyre is removed from a press (8) of the station before the arrival of the member in the zone.

3. Method according to at least any one of the preceding claims in which the or each cured tyre (24) is transferred before that of the or each green tyre (2).

4. Method according to at least any one of the preceding claims, in which the member (14) is moved inside the zone after the transfer of the or each cured tyre and before that of the or each green tyre.

5. Method according to at least any one of the preceding claims in which, during the first transport step, the member carries at least two green tyres (2).

6. Method according to at least any one of the preceding claims in which, during the second transport step, the member carries at least two cured tyres (24).

7. Transport member (14) such as a carriage, **characterized in that** it comprises:
- at least one green pneumatic tyre support (20), comprising at least one element (28) capable of being in contact with an upper sidewall of the green tyre when said green tyre rests on the support via a lower sidewall of the green tyre, and
- at least one support (22) of a cured tyre, the support being without such an element.

8. Member according to the preceding claim in which the green tyre supports (20) are at least two in number.

9. Member according to at least any one of Claims 7 or 8 in which the cured tyre supports (22) are at least two in number.

10. Member according to at least any one of Claims 7 to 9 in which the or each cured tyre support (22) comprises a roller table.

11. Installation (4) for manufacturing tyres, **characterized in that** it comprises a curing station (6) and a transport member (14) according to at least any one of Claims 7 to 10.

12. Installation according to the preceding claim, which comprises a dedicated track (16) for the mechanical guidance of the member (14) to a loading zone of the curing station.

13. Installation according to at least any one of Claims 11 to 12, in which the station comprises at least two curing presses (8).
